# EUROPÄISCHE PATENTSCHRIFT

(11) **EP 1 381 793 B1**
(45) Veröffentlichungstag und Bekanntmachung des Hinweises auf die Patenterteilung: **27.04.2005**
(21) Anmeldenummer: 02719784.7
(22) Anmeldetag: 08.02.2002
(51) Int. Cl.: F16H 1/28, F16J 15/00, F16H 57/04

(54) **GETRIEBE ODER PLANETENGETRIEBE**
DRIVE OR PLANETARY DRIVE
TRANSMISSION OU TRANSMISSION PLANETAIRE

(30) Priorität: 23.04.2001 DE 10119998; 22.05.2001 DE 10125148
(43) Veröffentlichungstag der Anmeldung: 21.01.2004
(60) Teilanmeldung: 04017481.5
(73) Patentinhaber: Wittenstein AG, 97999 Igersheim (DE)
(72) Erfinder: BAYER, Thomas, 97999 Igersheim (DE); OLD, Christof, 97980 Bad Mergentheim (DE)
(74) Vertreter: Weiss, Peter, Dr. rer. nat.
(86) Internationale Anmeldenummer: PCT/EP2002/001318
(87) Internationale Veröffentlichungsnummer: WO 2002/086351

(56) Entgegenhaltungen:
- DE-C- 3 610 226
- FR-A- 2 622 946
- US-A- 4 817 846
- US-A- 5 476 582
- US-A- 6 105 464
- US-A1- 2001 008 194
- PATENT ABSTRACTS OF JAPAN vol. 2000, no. 13, 5. Februar 2001 (2001-02-05) & JP 2000 297861 A (TOCHIGI FUJI IND CO LTD), 24. Oktober 2000 (2000-10-24)

## Beschreibung

Die vorliegende Erfindung betrifft ein Getriebe oder Planetengetriebe mit den Merkmalen des Oberbegriffs von Anspruch 1. Die US-A-4817846 zeigt diese Merkmale, wobei die Dichtelemente radial angeordnet sind. Weiterhin zeigt die FR-A-2622946 zwei einfache Dichtelemente axial hintereinander angeordnet.

Planetengetriebe sind in vielfältiger Form und Ausführung im Markt bekannt und gebräuchlich. Dabei können die Elemente formschlüssige Zahnräder, kraftschlüssige Riemen, Seile, Ketten, Kurbel- oder Schubgetriebe - Elemente sein. Hierauf sei die vorliegende Erfindung nicht beschränkt.

Nach dem Stand der Technik sind die meisten Planetengetriebe mittels eines stirnseitigen Dichtelementes abgedichtet, um ein Auslaufen von Schmiermitteln, insbesondere Getriebeöls bei Verschleiss des Dichtringes, insbesondere eines Simmerringes zu verhindern.

Herkömmliche Planetengetriebe unterliegen einem hohen Verschleiss und hierdurch verteilt sich Abrieb im Getriebe, der die Oberflächen der Elemente beschädigt.

Herkömmliche Planetengetriebe sind aufwendig herzustellen und zu montieren.

Der vorliegenden Erfindung liegt die Aufgabe zugrunde, ein Getriebe oder ein Planetengetriebe der eingangs genannten Art zu schaffen, mit welchem auf sehr kostengünstige und effektive Weise die Lebensdauer erhöht werden soll. Ferner sollen die Fertigungszeiten und Montagekosten eines derartigen Getriebes reduziert werden. Zudem soll Einfluss auf ein Wartungsintervall der Bauteile, auch insbesondere der Dichtungen vorgenommen werden können.

Zur Lösung dieser Aufgabe führen die Merkmale des Anspruchs 1.

Bei der vorliegenden Erfindung ist ein Getriebe oder ein Planetengetriebe geschaffen, bei welchem nahe der Lager von Antriebs- und/oder Abtriebswelle ein Ringraum zwischen einer inneren Mantelfläche von Gehäuseteilen und der Welle selbst bzw. eines Spannringes gebildet ist, welcher vorzugweise länglich ausgebildet ist. Bevorzugt ist der Ringraum von einer Tiefe, die in etwa einer Breite wenigstens zweier Dichtelemente, insbesondere eines Simmeringes, entspricht.

Der Ringraum nimmt zwei Dichtelemente, insbesondere zwei Simmeringe, axial neben einander angeordnet auf. Dabei ist einer der beiden Simmeringe nicht aktiv, d.h. dessen Dichtlippe liegt nicht an entweder der Antriebs- und/oder Abtriebswelle oder dessen Spannring an. Erst wenn der aktive Spannring einem gewissen Verschleiss unterliegt, so dass über Leckagen Öl oder Schmiermittel austritt, wird dies von einem entsprechenden Sensor erkannt, so dass dann der inaktive Simmering aktiviert und dessen Dichtlippe an die abzudichtenden Wellen oder Spannringe angelegt wird. Dies kann automatisch erfolgen und von einem System erkannt werden. Unter normalen Umständen müsste im Betrieb sofort nach Erkennen der Leckage das vollständige System, in welchem ein derartiges Getriebe integriert ist, angehalten und der Simmering müsste ausgetauscht werden. Dies würde hohe Kosten verursachen, was unerwünscht ist.

Um dies zu vermeiden, ist bei der vorliegenden Erfindung vorgesehen, einen zweiten inaktiven Ring mit einem speziell davor vorgesehenen Ringraum als zweiten Sicherungsring einzusetzen. Eine entsprechende nicht dargestellte Steuerung erkennt, wenn ein Dichtring durch Verschleiss verbraucht ist, so dass ein zweiter Sicherungsring aktiviert werden kann. Somit kann dann bei einem nächsten Wartungsintervall der beschädigte erste Dichtring ausgetauscht werden, ohne dass hierzu die vollständige Produktion oder der Betrieb der Planetengetriebe vorübergehend nur zum Wechsel des einen beschädigten Dichtringes angehalten werden muss.

Ferner hat sich als vorteilhaft erwiesen, ein Gehäuse des Getriebes oder Planetengetriebes dreiteilig auszubilden, wobei im ersten Gehäuseteil die Abtriebswelle mit stirnseitigem Scheibenumlaufträger gelagert ist, in welchem vorzugsweise die Bolzen zur Aufnahme der Planetenräder eingepresst sind. Zum Einpressen hat sich als vorteilhaft erwiesen, den Bolzen entweder als Hohlelement auszubilden oder mindest teilweise eine Aufnahmeöffnung im Scheibenumlaufträger mit einer Entlüftungsöffnung zu versehen. Zudem hat sich als vorteilhaft erwiesen, das Bolzenelement zumindest teilweise als Hohlelement auszubilden und im Bereich der Planetenräder eine Mehrzahl von radialen Bohrungen vorzusehen, die zum Zuführen von Schmiermitteln für das Nadellager des Planetenradträgers dienen.

Ein weiterer Vorteil bei der vorliegenden Erfindung ist, dass durch das dreiteilig ausgebildete Grehäuse eine Verzahnung durch die Planetenräder innerhalb des mittleren Gehäuseteiles direkt aus diesem hergestellt werden kann, beispielsweise durch Räumen. Hierdurch kann beispielsweise der mittlere Gehäuseteil aus einem speziell für die Verzahnung geeigneten Material hergestellt sein. Dies kann dann anschliessend mit dem ersten Gehäuseteil verbunden werden. Bevorzugt wird stirnseitig das zweite Gehäuseteil mit dem ersten Gehäuseteil fest und passgenau verschweisst.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Draufsicht auf ein erfindungsgemässes Getriebe, insbesondere Planetengetriebe;
Figur 2 eine teilweise aufgeschnittene perspektivische Ansicht auf das Planetengetriebe gemäss Figur 1;
Figur 3 einen schematisch dargestellten Längsschnitt durch das Planetengetriebe gemäss Figur 1;
Figur 4 einen Längsschnitt eines weiteren Ausführungsbeispieles eines weiteren Planetengetriebes gemäss Figur 1;
Figur 5 einen vergrössert dargestellten Teillängsschnitt durch das Getriebe gemäss Figur 1 im Bereich eines ersten Gehäuseteiles;
Figur 6 einen vergrössert dargestellten Teil eines Teillängsschnittes des ersten Gehäusteiles als weiteres Ausführungsbeispiel;
Figur 7 eine Draufsicht auf ein drittes Gehäuseteil mit einer Mehrzahl von stirnseitigen Sacklöchern zur Aufnahme von Magneten.

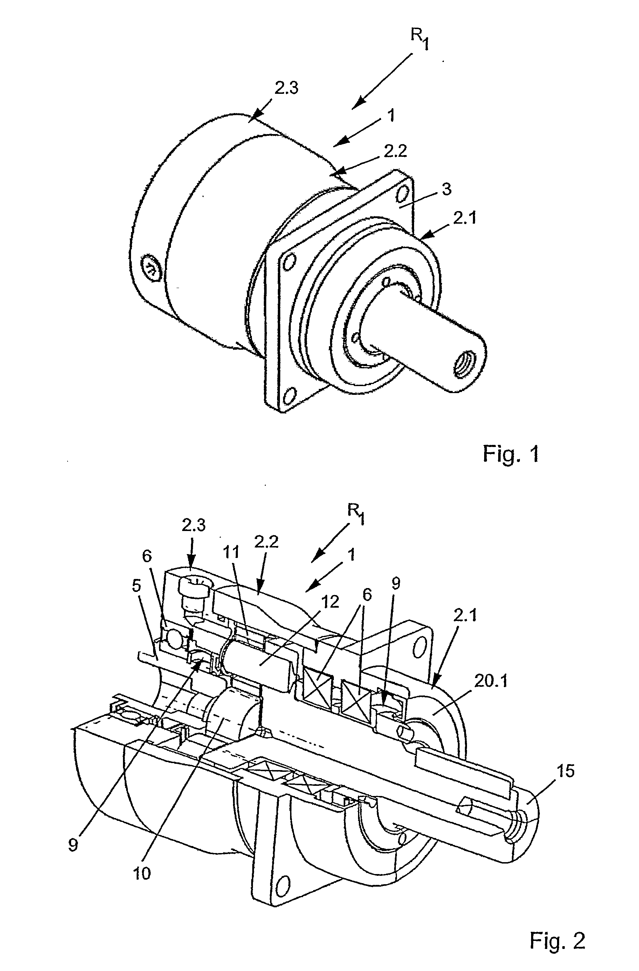

Gemäss Figur 1 weist ein erfindungsgemässses Getriebe R₁ ein Gehäuse 1 auf, welches vorzugsweise in drei Gehäuseteile 2.1, 2.2, 2.3 unterteilt ist. Der erste Gehäuseteil 2.1 ist mit einem Flansch 3 zum Festlegen des Getriebes R₁ an einem beliebigen Antriebselement od. dgl. versehen.

In das Gehäuseteil 2.3 ragt (siehe auch Figur 2) eine Antriebswelle 5 ein und ist über zumindest ein Lager 6 drehbar gegenüber dem Gehäuseteil 2.3 gelagert. Innerhalb der Lager 6 ist die Antriebswelle 5 mit einem Absatz 7 versehen, wobei zwischen Absatz 7 und einer inneren Mantelfläche 8 ein Ringraum 9 gebildet ist.

Ferner sitzt der Antriebswelle 5 ein Stirnrad 10 auf, welches vorzugweise drei Planetenräder 11 kämmt, die auf Bolzenelementen 12 über Nadellager 13 gelagert sind. Die Bolzenelemente 12 sind in einen Scheibenumlaufträger 14 einer Abtriebswelle 15 eingepresst. Innen im Gehäuseteil 2.2 ist eine Verzahnung 16 radial umlaufend angeordnet. Vorzugsweise ist das Gehäuseteil 2.2 als Hülse ausgebildet und weist innen die Verzahnung 16 auf. Dabei kämmen die Planetenräder 11 die Verzahnung 16 des Gehäuseteiles 2.2.

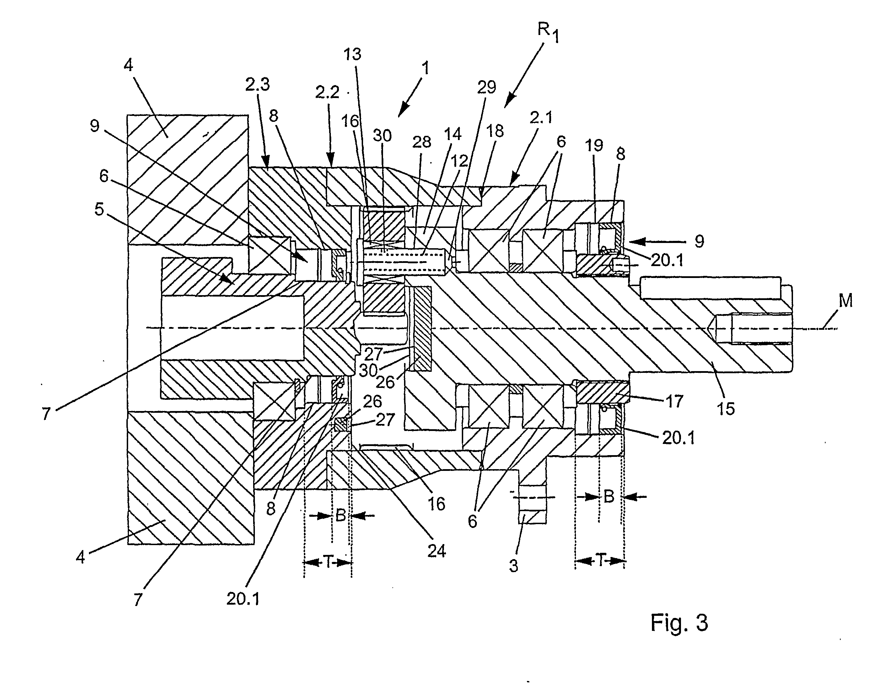

Die Abtriebswelle 15 ist, wie es aus dem bevorzugten Ausführungsbeispiel gemäss Figur 3 hervorgeht, über zwei nebeneinander angeordnete Lager 6 innerhalb des Gehäuseteiles 2.1 drehbar gelagert und gegenüber dem Gehäuseteil 2.2 über einen Spannring 17 festgelegt.

Über hier nicht näher bezifferte Absätze und Flansche sitzt das Gehäuseteil 2.3 wiederlösbar stirnseitig dem Gehäuseteil 2.2 auf.

Ferner hat sich als besonders vorteilhaft erwiesen, das Gehäuseteil 2.2 andernends stirnseitig mit dem Gehäuseteil 2.1 fest zu verbinden, insbesondere über eine Schweissnaht 18.

Hierdurch kann gewährleistet werden, dass insbesondere die Verzahnung 16 sehr kostengünstig und präzise in dem Gehäuseteil 2.2 selbst, beispielsweise durch Räumen hergestellt werden kann.

Ferner ist von Vorteil bei der vorliegenden Erfindung, dass an eine beliebige Adapterplatte 4 das Gehäuseteil 2.3 direkt anschliessbar ist. Bevorzugt überlappt die Adapterplatte 4 zumindest den Aussenring des Lagers 6, so dass das Lager 6 im Gehäuseteil 2.3 gehalten wird. An die Adapterplatte 4 lässt sich bspw. das vollständige Planetengetriebe, insbesondere der Gehäuseteil 2.3 wiederlösbar und präzise festlegen. Im Anschluss an die Lager 6 des Gehäuseteiles 2.1 ist im stirnseitigen Bereich ein weiterer Absatz 19 gebildet, wobei zwischen Abtriebswelle 15 und Absatz 19 bzw. innerer Mantelfläche 8 des Gehäuseteiles 2.1 ein weiterer Ringraum 9 gebildet ist. Dabei ist der Ringraum 9 von einer Tiefe T, die in einem bevorzugten Ausführungsbeispiel einer zweifachen Breite B eines Dichtelementes 20.1 entspricht.

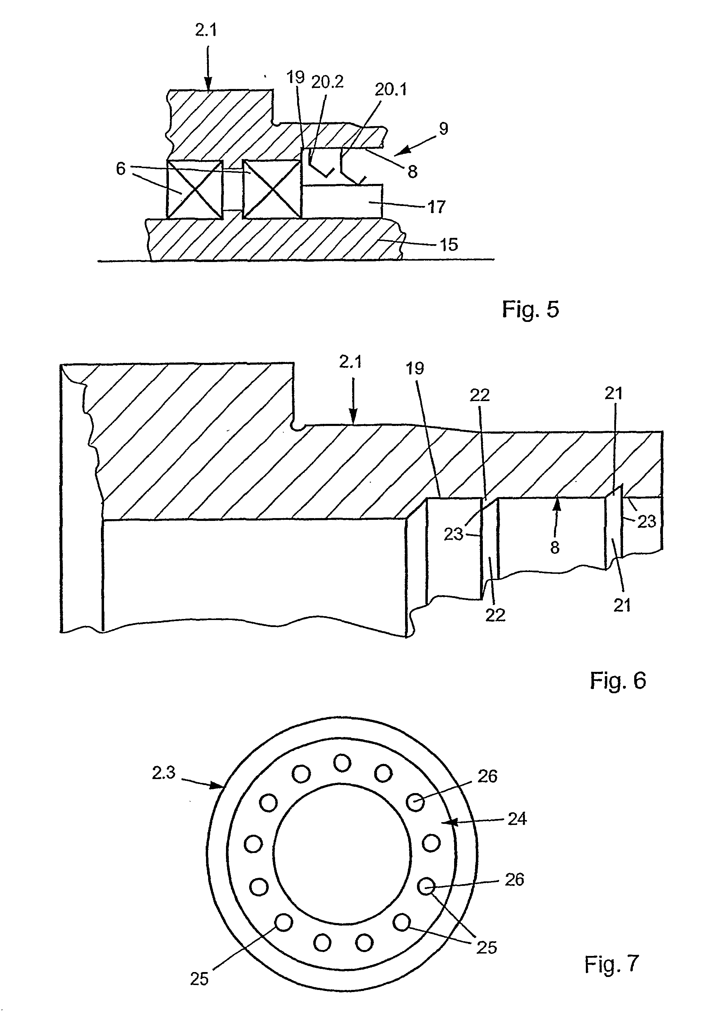

Gemäß der vorliegenden Erfindung sind in den Ringraum 9, hier nicht dargestellt, über seine Tiefe T zwei Dichtelemente 20.1 hintereinander eingesetzt. Dabei ist das Dichtelement 20.1 das stirnseitig abschliessende Dichtelement, wobei ein zweites Dichtelement 20.2 (siehe Figur 5) in den Ringraum 9 eingesetzt werden kann. Dabei ist das Dichtelement 20.1 oder 20.2 als zusätzliches Sicherheits-Dichtelement, welches nicht aktiv ist, in dem Ringraum 9 eingesetzt. Fällt eines der beiden Dichtelemente 20.1 oder 20.2 aus bzw. lässt eines der beiden Dichtelemente 20.1 oder 20.2, insbesondere als Simmering ausgebildet, Öl nach aussen austreten, so werden über hier nicht näher dargestellte Sensorelemente die Leckagen erkannt, so dass über ebenfalls hier nicht dargesstellte Elemente oder Einrichtungen das nicht aktive Dichtelement aktiviert wird. Hierzu ist es erforderlich, einen Ringraum 9 vorzusehen, der wenigstens zwei Dichtelemente 20.1, 20.2 axial hintereinander aufnimmt.

Damit die Dichtelemente 20.1, 20.2 fest im Ringraum 9 gehalten bzw. verankert werden können, sind an der inneren Mantelfläche 8 der Gehäuseteile 2.1 und 2.3 (siehe auch Figuren 3 und 6) vorzugsweise umlaufende Ausnehmungen 21 oder Erhöhungen 22 vorgesehen, in welche das Material des Dichtelementes 20.1, 20.2 eingreift, oder die Erhöhung 22 in das Material des Dichtelementes 20.1, 20.2 eingedrückt wird.

Dabei ist jeweils eine Kante 23 gebildet, die ein Herausrutschen des Dichtelementes 20.1, 20.2 aus dem Ringraum 9 verhindert.

Im dem Ausführungsbeispiel gemäss Figur 3 ist das Lager 6 zwischen Antriebswelle 5 und Gehäuseteil 2.3 stirnseitig nach aussen gerichtet angeordnet, da dieses häufig ausgewechselt werden muss. Um eine Abdichtung, insbesondere der in Schmiermittel laufenden Elemente 10, 11, 12 und 14 zu erhalten, ist der Ringraum 9 zur Aufnahme der Dichtelemente 20.1, 20.2 zwischen dem Absatz 7 der Antriebswelle 5 und der inneren Mantelfläche 8 des Gehäuseteiles 2.3 gebildet. Auch hier entspricht eine Tiefe T der Mantelfläche 8 vorzugsweise einer doppelten Breite B eines Dichtelementes 20.1.

Es hat sich ferner als vorteilhaft erwiesen, in einer Stirnseite 24 (siehe auch Figur 7) eine Mehrzahl von Sacklöchern 25 vorzusehen, in welche, wie insbesondere in Figur 7 dargestellt ist, radial umlaufend jeweils Permanentmagnete 26 vorgesehen sind. Dabei kann es von Vorteil sein, dass die Permanentmagnete 26 im Sackloch 25 zurückfallend eingesetzt sind, so dass zwischen der Stirnseite 24 und dem Permanentmagneten 26 im Sackloch 25 eine Mulde 27 gebildet ist. Diese dient zum Aufnehmen von Metallspänen oder ferritischen Partikeln, die infolge von Verschleiss im Betrieb der Elemente 10, 11, 12 und 14 entstehen. Da insbesondere die oben genannten Elemente 10, 11, 12 und 14 im Betrieb einem Verschleiss unterliegen, ist die Stirnseite 24 mit dem vorgesehenen Permanentmagneten 26 nahe zu den Planetenräder 11, bzw. zu der der Verzahnung 16 hin ausgerichtet. Über die Anordnung einer Mehrzahl entsprechender Permanentmagneten 26 radial in dem Gehäuseteil 2.3, nahe der Planetenräder 11 bzw. Verzahnung 16 lässt sich auf diese Weise sehr effektiv ferritisches verschlissenes Material absondern und aufnehmen. Wird beispielsweise das Lager 6 ausgetauscht, indem der Gehäuseteil 2.3 vom Gehäuseteil 2.2 abgeflanscht wird, so können sehr zugänglich die Mulden 27 gereinigt werden.

Ferner ist der Abtriebswelle 15, insbesondere deren Scheibenumlaufträger 14 ebenfalls ein Permamentmagnet 26 in eine Stirnseite 30 zurückversetzt eingesetzt, so dass zwischen der Stirnseite 30 und dem Permanentmagneten 26 eine Mulde 27 zum Aufnehmen von Spänen und Abrieb gebildet ist.

Wichtig ist hier, dass zur Vermeidung von Unwuchten der Permamentmagnet 26 zentrisch zur Mittelachse M ausgerichtet stirnseitig in den Scheibenumlaufträger 14 eingesetzt ist.

Hierdurch wird insbesondere der Abrieb des Stirnrades 10 sowie auch der Planetenräder 11 durch den Permanentmagneten 26, insbesondere in dessen Mulde 27 aufgenommen.

Die Permanentmagneten 26 sind radial innen im Gehäuseteil 2.2 vorzugsweise nahe der Verzahnung 16 um dessen Mantelfläche verteilt anzuordnen.

Wie ferner aus Figur 3 hervorgeht, kann das Bolzenelement 12 aus vollem Rundmaterial hergestellt sein. Dann ist endseits einer Aufnahmeöffnung 28 im Scheibenumlaufträger 14 eine Entlüftungsöffnung 29 vorgesehen, die zum erleichterten Einpressen der Bolzenelemnte 12 in die Aufnahmeöffnung 28 dient.

Ist das Bolzenelement 12 als Hohlwelle, wie es hier gestrichelt angedeutet ist, ausgebildet, so kann die Entlüftungsöffnung 29 entfallen. Vorzugsweise ist dann eine Mehrzahl von radialen Bohrungen 30, wie es ebenfalls gestrichelt dargestellt ist, im Bolzenelement 12 vorgesehen, die einer zusätzlichen Schmierung des Nadellagers 13 für die Planetenräder 11 dienen.

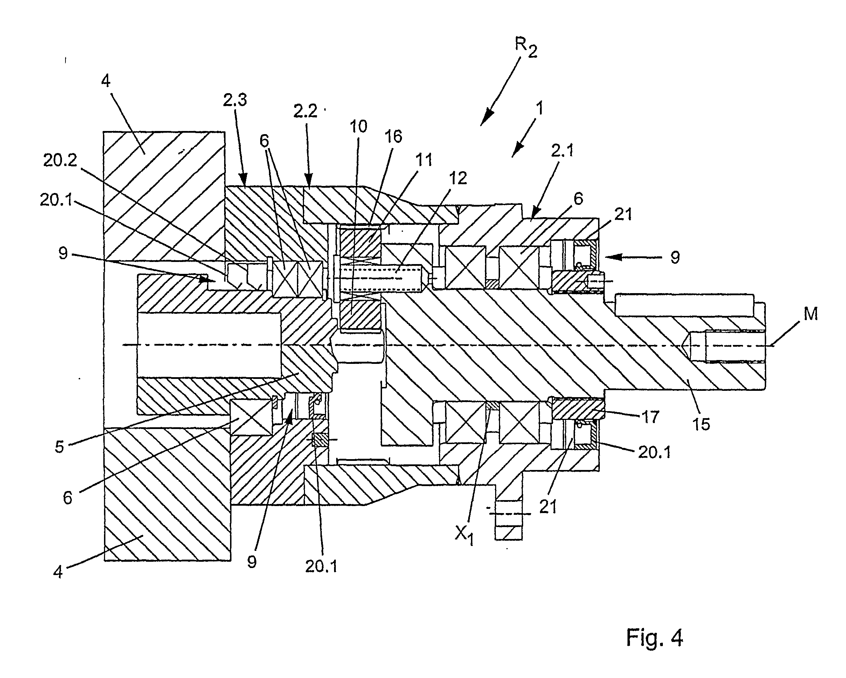

Das Ausführungsbeispiel gemäss Figur 4 zeigt ein Getriebe R₂, welches im wesentlichen dem gemäss Figur 3 entspricht. Hier sind zwei Möglichkeiten der Anordnung der Dichtelemente 20.1, 20.1 angedeutet. Entweder sind die Dichtelemente 20.1, 20.2 im endseitigen stirnseitigen Bereich des Gehäuseteiles 2.3 in den Ringraum 9 eingesetzt, wie es oberhalb einer Mittelachse M im Längsschnitt dargestellt ist, oder sie sind wie unterhalb der Mittelachse M dargestellt angeordnet, was der Anordnung gemäss dem Ausführungsbeispiel Figur 3 entspricht. Dabei ist der Ringraum 9 innerhalb des Lagers 6 zur Aufnahme der beiden Dichtelemente 20.1, 20.2 gebildet. Auf diese Weise kann ebenfalls Einfluss auf die Verwendung unterschiedlicher Lager 6, in Schmiermittel laufend oder selbstschmierend, genommen werden.

Ferner ist, wie es bspw. in Figur 4 dargestellt ist, die Abriebswelle 15 über zwei zueinander beabstandete Lager 6 gelagert. Dabei sitzt ein Ring X₁ zwischen den Lagern 6 der Abtriebswelle 6 auf und beabstandet die Lager 6 axial zueinander.

Je nach Breite des Ringes X₁ lässt sich ein Spiel der Abtriebswelle 15 über eine als Spannring 17 ausgebildete Wellenmutter einstellen. Dabei kann eines der Lager 6 stirnseitig, ggf. beabstandet über einen zusätzlichen Distanzring an dem Scheibenumlaufträger 14 anliegen. Dies soll ebenfalls im Rahmen der vorliegenden Erfindung liegen.

## Patentansprüche

1. Getriebe oder Planetengetriebe mit einer Antriebswelle (5) und zumindest einer Abtriebswelle (15), welche über zumindest ein Element (10, 11, 12, 14) in Verbindung stehen, und Antriebswelle (5) sowie Abtriebswelle (15) über Lager (6) gegenüber zumindest einem Gehäuseteil (2.1 bis 2.3) gelagert sind, wobei zwischen dem zumindest einen Gehäuseteil (2.1 bis 2.3) und Antriebs-/oder Abtriebswelle (5, 15) ein gemeinsamer Ringraum (9) vorgesehen ist, in welchem ein aktives Dichtelement (20.1, 20.2) und ein inaktives aktivierbares Dichtelement (20.1 oder 20.2) angeordnet sind,
**dadurch gekennzeichnet,**
**dass** die Dichtelemente axial hintereinander angeordnet sind und dass der Ringraum (9) benachbart zu den Lagern (6) zwischen Antriebs- und/oder Abtriebswelle (5, 15) und dem Gehäuseteil (2.1 bis 2.3) gebildet ist.

2. Getriebe oder Planetengetriebe nach Anspruch 1, **dadurch gekennzeichnet, dass** zur Fixierung zumindest eines Dichtelementes (20.1, 20.2) in einer inneren Mantelfläche (8) des zumindest einen Gehäuseteiles (2.1 bis 2.3) wenigstens eine zumindest teilweise umlaufende Ausnehmung (21) oder Erhöhung (22) vorgesehen ist, die radial mit dem zumindest einen Dichtelement (20.1, 20.2) zusammenwirkt.

3. Getriebe nach Anspruch 1 oder 2, **dadurch gekennzeichnet, dass** der eine Ringraum (9) innerhalb oder ausserhalb der Lager (6) gebildet ist.

4. Getriebe nach Anspruch 3, **dadurch gekennzeichnet, dass** der Ringraum (9) radial zwischen dem zumindest einen Gehäuseteil (2.1 bis 2.3) und Antriebs- und/oder Abtriebswelle (5, 15) nahe der Lager (6) vorgesehen ist.

5. Getriebe nach wenigstens einem der Ansprüche 2 bis 4, **dadurch gekennzeichnet, dass** der Ringraum (9) in der inneren Mantelfläche (8) von einer Tiefe (T) gebildet ist, die in etwa einer Breite (B) zweier Dichtelemente (20.1 oder 20.2) oder einem Mehrfachen der Breite (B) der Dichtelemente (20.1, 20.2) entspricht.

6. Getriebe nach wenigstens einem der Ansprüche 2 bis 5, **dadurch gekennzeichnet, dass** in der Mantelfläche (8) die Ausnehmung (21) und/oder die Erhöhung (22) umlaufend ausgebildet ist.

7. Getriebe nach wenigstens einem der Ansprüche 2 bis 6, **dadurch gekennzeichnet, dass** die Ausnehmung (21) und/oder die Erhöhung (22) als umlaufende Phase ausgebildet ist/sind.

8. Getriebe nach wenigstens einem der Ansprüche 2 bis 7, **dadurch gekennzeichnet, dass** die Ausnehmung (21) und/oder die Erhöhung (22) in etwa mittig auf einer Aussenfläche des Dichtelementes (20.1 oder 20.2) in der inneren Mantelfläche (B) des zumindest einen Gehäuseteiles (2.1 bis 2.3) vorgesehen sind.

9. Getriebe nach wenigstens einem der Ansprüche 1 bis 8, **dadurch gekennzeichnet, dass** die Abtriebswelle (15) endseitig einen Scheibenumlaufträger (14) aufweist, in welchem zumindest ein Bolzenelement (12) zum Aufnehmen zumindest eines Planetenrades (11) formschlüssig eingesetzt, insbesondere eingepresst ist.

10. Getriebe nach Anspruch 9, **dadurch gekennzeichnet, dass** das Bolzenelement (12) innen zumindest teilweise hohl, insbesondere als Hohlwelle, ausgebildet ist.

11. Getriebe nach Anspruch 9 oder 10, **dadurch gekennzeichnet, dass** das Bolzenelement (12) zumindest eine radiale Bohrung zur Schmierung des Planetenrades (11) aufweist.

12. Getriebe nach wenigstens einem der Ansprüche 1 bis 11, **dadurch gekennzeichnet, dass** ein Gehäuse (1) dreiteilig aus drei Gehäuseteilen (2.1 bis 2.3) zusammengesetzt ist, wobei in einem ersten Gehäuseteil (2.1) die Abtriebswelle (15), im mittleren Gehäuseteil (2.2) die Elemente (10, 11, 12. 14) und im dritten Gehäuseteil (2.3) die Antriebswelle (5) gelagert sind.

13. Getriebe nach Anspruch 12, **dadurch gekennzeichnet, dass** im mittleren Gehäuseteil (2.2) innen in dessen Mantelfläche (8) eine Verzahnung (16) zum Kämmen des zumindest einen Planetenrades (11) gebildet ist.

14. Getriebe nach wenigstens einem der Ansprüche 12 bis 13, **dadurch gekennzeichnet, dass** das mittlere Gehäuseteil (2.2) mit dem ersten Gehäuseteil (2.1) verschweisst ist.

## Claims

1. Gear or planetary gear, having a drive shaft (5) and at least one driven shaft (15), which are connected by at least one element (10,11,12,14), and the drive shaft (5) as well as the driven shaft (15) are mounted via bearings (6) relative to at least one housing part (2.1 to 2.3), a common annular space (9) being provided between the at least one housing part (2.1 to 2.3) and drive or driven shaft (5, 15), in which annular space an active sealing element (20.1, 20.2) and an inactive activatable sealing element (20.1 or 20.2) are disposed, **characterised in that** the sealing elements are disposed axially behind each other, and **in that** the annular space (9) is formed adjacent the bearings (6) between drive and/or driven shaft (5, 15) and the housing part (2.1 to 23).

2. Gear or planetary gear according to claim 1, **characterised in that**, for securing at least one sealing element (20.1, 20.2) in an internal surface (8) of the at least one housing part (2.1 to 2.3), at least one recess (21) or raised portion (22) is provided, which is at least partially circular and co-operates radially with the at least one sealing element (20.1, 20.2).

3. Gear according to claim 1 or 2, **characterised in that** the one annular space (9) is formed internally or externally of the bearings (6).

4. Gear according to claim 3, **characterised in that** the annular space (9) is provided radially between the at least one housing part (2.1 to 2.3) and drive and/or driven shaft (5, 15) in the vicinity of the bearings (6).

5. Gear according to at least one of claims 2 to 4, **characterised in that** the annular space (9) is formed in the internal surface (8) from a depth (T), which corresponds substantial to one width (B) of two sealing elements (20.1 or 20.2) or a multiple of the width (B) of the sealing elements (20.1, 20.2).

6. Gear according to at least one of claims 2 to 5, **characterised in that** the recess (21) and/or the raised portion (22) have/has a circular configuration in the surface (8).

7. Gear according to at least one of claims 2 to 6, **characterised in that** the recess (21) and/or the raised portion (22) are/is in the form of a circular phase.

8. Gear according to at least one of claims 2 to 7, **characterised in that** the recess (21) and/or the raised portion (22) are/is provided substantially centrally on an external face of the sealing element (20.1 or 20.2) in the internal surface (8) of the at least one housing part (2.1 to 2.3).

9. Gear according to at least one of claims 1 to 8, **characterised in that** the driven shaft (15) has a rotating disc support (14) at its end, in which support at least one pin element (12) is inserted, more especially pressed-in, in a form-fitting manner to accommodate at least one planet wheel (11).

10. Gear according to claim 9, **characterised in that** the pin element (12) is configured internally to be at least partially hollow, more especially it is configured as a hollow shaft.

11. Gear according to claim 9 or 10, **characterised in that** the pin element (12) has at least one radial bore for lubricating the planet wheel (11).

12. Gear according to at least one of claims 1 to 11, **characterised in that** a housing (1) is assembled in three parts from three housing parts (2.1 to 2.3), the driven shaft (15) being mounted in a first housing part (2.1), the elements (10, 11, 12, 14) being mounted in the central housing part (2.2), and the drive shaft (5) being mounted in the third housing part (2.3).

13. Gear according to claim 12, **characterised in that** a toothed portion (16) for meshing with the at least one planet wheel (11) is formed in the central housing part (2.2), internally in the surface (8) thereof.

14. Gear according to at least one of claims 12 to 13, **characterised in that** the central housing part (2.2) is welded to the first housing part (2.1).

## Revendications

1. Transmission ou transmission planétaire avec un arbre d'entraînement (5) et au moins un arbre de sortie (15) qui sont reliés entre eux par l'intermédiaire d'au moins un élément (10, 11, 12, 14), et l'arbre d'entraînement (5) ainsi que l'arbre de sortie (15) étant montés par l'intermédiaire de roulements (6) vis-à-vis d'au moins un élément de boîtier (2.1 à 2.3), entre l'au moins un élément de boîtier (2.1 à 2.3) et l'arbre d'entraînement ou de sortie (5, 15) étant prévu un espace annulaire commun (9) dans lequel sont disposés un élément d'étanchéité actif (20.1, 20.2) et un élément d'étanchéité inactif pouvant être activé (20.1 ou 20.2),
**caractérisée par le fait que**
les éléments d'étanchéité sont disposés axialement l'un derrière l'autre et que l'espace annulaire (9) est formé adjacent aux roulements (6) entre l'arbre d'entraînement et/ou de sortie (5, 15) et l'élément de boîtier (2.1 à 2.3).

2. Transmission ou transmission planétaire selon la revendication 1, **caractérisée par le fait que** pour la fixation d'au moins un élément d'étanchéité (20.1, 20.2) dans une face d'enveloppe intérieure (8) de l'au moins un élément de boîtier (2.1 à 2.3} est prévu au moins un évidement (21) ou une surélévation (22) au moins partiellement en boucle qui coopère radialement avec l'au moins un élément d'étanchéité (20.1, 20.2).

3. Transmission selon la revendication 1 ou 2, **caractérisée par le fait que** l'un espace annulaire (9) est formé à l'intérieur ou à l'extérieur des roulements (6).

4. Transmission selon la revendication 3, **caractérisée par le fait que** l'un espace annulaire (9) est prévu radialement entre l'au moins un élément de boîtier (2.1 à 2.3) et l'arbre d'entraînement et/ou de sortie (5, 15), près des roulements (6).

5. Transmission selon au moins l'une des revendications 2 à 4, **caractérisée par le fait que** l'un espace annulaire (9) est formé dans la face d'enveloppe intérieure (8) par une profondeur (T) correspondant environ à une largeur (B) de deux éléments d'étanchéité (20.1 ou 20.2) ou à un multiple de la largeur (B) des éléments d'étanchéité (20.1, 20.2).

6. Transmission selon au moins l'une des revendications 2 à 5, **caractérisée par le fait que**, dans la face d'enveloppe (8), l'évidement (21) et/ou la surélévation (22) sont réalisés en boucle.

7. Transmission selon au moins l'une des revendications 2 à 6, **caractérisée par le fait que** l'évidement (21) et/ou la surélévation (22) est/sont réalisé(s) sous forme de phase en boucle.

8. Transmission selon au moins l'une des revendications 2 à 7, **caractérisée par le fait que** l'évidement (21) et/ou la surélévation (22) sont prévus environ au centre sur une face extérieure de l'élément d'étanchéité (20.1 ou 20.2) dans la face d'enveloppe intérieure (8) de l'au moins un élément de boîtier (2.1 à 2.3).

9. Transmission selon au moins l'une des revendications 1 à 8, **caractérisée par le fait que** l'arbre d'entraînement (15) présente, du côté de l'extrémité, un support de disque en boucle (14) dans lequel est placé, en particulier pressé, en liaison de forme un élément de boulon (12} destiné à recevoir au moins une roue planétaire (11).

10. Transmission selon la revendication 5, **caractérisée par le fait que** l'élément de boulon (12) est réalisé au moins partiellement creux à l'intérieur, en particulier sous forme d'arbre creux.

11. Transmission selon la revendication 9 ou 10, **caractérisée par le fait que** l'élément de boulon (12) présente au moins un alésage radial destiné au graissage de la roue planétaire (11).

12. Transmission selon au moins l'une des revendications 1 à 11, **caractérisée par le fait qu'**un boîtier (1) est en trois parties, composé de trois éléments de boîtier (2.1 à 2.3), dans un premier élément de boîtier (2.1) étant monté l'arbre de sortie (15), dans l'élément de boîtier central (2.2) étant montés les éléments (10, 11, 12, 14) et dans le troisième élément de boîtier (2.3) étant monté l'arbre d'entraînement (5).

13. Transmission selon la revendication 12, **caractérisée par le fait que** dans l'élément de boîtier central (2.2) est réalisée à l'intérieur dans sa face d'enveloppe (8) une denture (16) destinée à peigner l'au moins une roue planétaire (11).

14. Transmission selon au moins l'une des revendications 12 à 13, **caractérisée par le fait que** l'élément de boîtier central (2.2) est assemblé au premier élément de boîtier (2.1) par soudure.
